# EUROPÄISCHE PATENTSCHRIFT

(11) **EP 2 942 267 B1**
(45) Veröffentlichungstag und Bekanntmachung des Hinweises auf die Patenterteilung: **26.10.2022**
(21) Anmeldenummer: 15166980.1
(22) Anmeldetag: 08.05.2015
(51) Int. Cl.: B62M 6/55, B62M 11/00, B62M 9/06

(54) **ELEKTRISCHES ANTRIEBSSYSTEM FÜR EIN FAHRZEUG, INSBESONDERE EIN BATTERIEGETRIEBENES E-BIKE, S-PEDELEC, E-BIKE MIT STEUERUNG IN VERSCHIEDENEN BETRIEBSMODI**
ELECTRICAL DRIVE SYSTEM FOR A VEHICLE, IN PARTICULAR A BATTERY-DRIVEN E-BIKE, S-PEDELEC, E-BIKE WITH CONTROL IN DIFFERENT OPERATIONAL MODES
SYSTÈME D'ENTRAÎNEMENT ÉLECTRIQUE POUR UN VÉHICULE, EN PARTICULIER UN VÉLO ÉLECTRIQUE ALIMENTÉ PAR BATTERIE, PÉDELEC S, VÉLO ÉLECTRIQUE DOTÉ DE COMMANDE DANS DIFFÉRENTS MODES DE FONCTIONNEMENT

(30) Priorität: 09.05.2014 DE 102014106591
(43) Veröffentlichungstag der Anmeldung: 11.11.2015
(73) Patentinhaber: LSP INNOVATIVE AUTOMOTIVE SYSTEMS GMBH, 85774 Unterföhring (DE)
(72) Erfinder: Leiber, Thomas, 81675 München (DE)
(74) Vertreter: Lenzing Gerber Stute

(56) Entgegenhaltungen:
- EP-A1- 2 192 317
- WO-A1-2011/013109
- WO-A1-2011/124415
- DE-A1-102012 209 096
- JP-A- H08 295 281
- JP-A- H11 240 481
- JP-B2- 4 275 637
- JP-B2- 5 246 656
- US-A- 2 331 976
- US-A- 4 397 369
- US-A- 5 361 863

## Beschreibung

Die Erfindung betrifft ein elektrisches Antriebssystem für ein insbesondere ein batteriegetriebenes E-Bike, S-Pedelec, E-Bike und deren Steuerung und Betriebsmodi gemäß dem Oberbegriff des Anspruchs 1.

### Stand der Technik

Antriebssysteme für Pedelecs und E-Bikes gibt es in zwei üblichen Formen:
- Radnabenantriebe entweder am Vorderrad oder Hinterrad
- Zentralantriebe (z.B. Firma Bosch, Panasonic) mit Hinterradschaltungen.

Radnabenantriebe übertragen die Kraft direkt auf ein Laufrad. Sie haben den Vorteil, dass sie einfach installiert werden können im Vorderrad und Hinterrad. Da ein Radnabenmotor bei geringen Drehzahlen betrieben wird (Radgeschwindigkeit ca. 300-400 U/min bei S-Pedelecs bei 45 km/h, 27 Zoll Rädern), ist für die Leistung ein hohes Drehmoment erforderlich. Dies hat zur Folge, dass Radnabenmotoren ein hohes Gewicht aufweisen, da das Drehmoment die Größe der Elektromotoren bestimmt. Zusätzlich nachteilig sind die hohen nicht gefederten Massen und die hohen Kosten, da eine große Menge von Seltenerdenmagneten eingesetzt werden müssen. Dies hat zur Folge, dass Radnabenantriebe primär bei Pedelecs mit geringer Unterstützungsleistung (250 Watt) eingesetzt werden.

Zentralantriebe erzeugen die Leistung/ Drehmoment im Zentralbereich des Fahrzeuges. In einem derartigen Antriebssystem wird die Leistung/Drehmoment von einem kleinem Elektromotor erzeugt, der bei höheren Drehzahlen (ca. 3000 U/min) arbeitet. Die Drehzahl des Elektromotors wird durch mehrere Übersetzungsstufen (in der Regel 2-3 Übersetzungsstufen) reduziert und umgekehrt proportional das Drehmoment des Elektromotors erhöht. Die Krafteinleitung erfolgt auf die Kurbelwelle. Da die maximale Kurbelwellendrehzahl, die ein Mensch leisten kann, bei ca. 100 U/min liegt, ist eine Übersetzung der Motordrehzahl zur Kurbelwellendrehzahl i_{Mot}->KW von ca. 25-30 erforderlich. Um die Antriebskraft auf das Hinterrad zu bringen, ist aufgrund der Verhältnisse der Kurbelwellendrehzahl zur Raddrehzahl eine Übersetzung iAN= Drehzahl Antrieb/ Drehzahl Rad < 1 erforderlich (in der Regel i_{An} =<0,5). In der Hinterachse sind unterschiedliche Schaltungen (Nabenschaltungen, Kettenschaltungen, stufenlose Getriebe mit Kugeln) eingesetzt, die eine weitere Übersetzungseinstellung (iCVT =0.5-1.8 bei stufenlosen Getrieben) ermöglichen.

Insgesamt haben Zentralantriebe Vorteile gegenüber Radnabenmotoren, da trotz des Einsatzes eines Getriebes, eine Gewichtseinsparung durch den Einsatz eines kleinen Elektromotors möglich ist. Dieser Vorteil wird umso größer, je höher die Antriebsleistung/ Drehmoment am Hinterrad ist. Daher haben sich Zentralantriebe bei S-Pedelecs durchgesetzt.

Nachteilig bei Zentralantrieben ist der Wirkungsgradverlust, bedingt durch mehrere Übersetzungsstufen (vier bis fünf Übersetzungen). Zusätzlich ist das Drehmoment, das ein Zentralmotor erzeugen kann, primär limitiert durch die am Markt verfügbaren Antriebselemente und Schaltungen. Da Nabenschaltungen/ stufenlose Getriebe auf den Einsatz im Fahrrad ausgelegt sind (übliche schmale Fahrradketten). Somit ist die Kette das schwache Glied, insbesondere beim Einsatz von Zentralmotoren mit hohem Ausgangsmoment. Zudem werden die Schaltungen mit hohen Eingangsmomenten am Hinterrad sehr stark belastet.

Aus WO2011/124415 A1 ist eine Antriebsvorrichtung für ein Fahrrad bekannt, welche einen Motor zur Erzeugung einer ersten mechanischen Antriebsleistung, eine Tretlagerwelle und Tretkurbeln, mindestens einem Kettenblatt und einem Überlagerungsgetriebe aufweist, wobei das Überlagerungsgetriebe ein Planetengetriebe mit einem Sonnenrad, einem Planetenräder lagernden Planetenträger und einem Hohlrad ist. Das Kettenblatt ist dabei mit dem Planetenradträger verbunden. Der Motor ist mit dem Sonnenrad und die Tretlagerwelle oder die Tretkurbeln mit dem Hohlrad oder umgekehrt drehbar gekoppelt, so dass sich die mechanische Leistung des Motors mit der mittels der Tretkurbeln erzeugten mechanischen Antriebsleistung aufsummiert. Zwischen dem Motor und dem Planetengetriebe ist zumindest eine weitere fest angeordnete und nicht schaltbare Getriebestufe angeordnet.

Aus der EP 2 192 317 A1 ist ferner ein Fahrrad mit einem Hilfsmotor bekannt, bei dem die mechanische Antriebsleistung des Motors auf die Tretlagerwelle mittels eines Kettenantriebs übertragen wird. Das Hinterrad ist mittels einer Fahrradkette mit dem von der Tretlagerwelle angetriebenem Kettenblatt verbunden.

JP 5246656 B2, JPH 11240481 A, US 000004397369 A, US 5361863A, JPH 08295281 A, US 2331976 A, WO 2011013109 A1, JP 4275637 B2 sind ebenfalls Pedelecs bzw. Antriebsvorrichtungen für diese bekannt, wobei zwischen dem Antriebsmotor und dem das Hinterrad antreibenden letztem Getriebe kein Schaltgetriebe zur variablen Übersetzung angeordnet ist.

DE 10 2012 209096 A1 offenbart die Merkmale des Oberbegriffs des Anspruchs 1.

### Aufgabe der Erfindung

Aufgabe der Erfindung ist, ein kompaktes Antriebssystem mit hohem Wirkungsgrad zu konzipieren.

### Lösung der Aufgabe

Die Aufgabe der Erfindung wird durch ein Antriebssystem mit den Merkmalen des Patentanspruchs 1 gelöst.

Dem Antriebssystem liegt dabei die Grundidee zu Grunde, dass die Kraft der Kurbelwelle nicht direkt auf die Hinterachse wirkt, wie es bei Zentralmotoren mit einer Nabenschaltung im Hinterrad üblich ist, sondern dass die Nabenschaltung (Getriebe) im Mittelbereich mit integriert wird und die Kurbelwellendrehzahl übersetzt wird.

Weitere Ausführungsformen bzw. Ausgestaltungen der Erfindung und deren Vorteile sind in den weiteren Ansprüchen enthalten, auf die hier auch zu Beschreibungszwecken Bezug genommen wird.

Mit der Erfindung bzw. ihren Ausführungen / Ausgestaltungen wird ein neuartiger Zentralantrieb geschaffen, in dem ein, insbesondere stufenloses, Getriebe, eine Kurbelwelle mit Pedalen und ein hocheffizienter Elektromotor zu einem neuartigen kompakten Antriebssystem integriert sind. Dabei kann die Kurbelwelle in einer möglichen Ausführungsform drehbar und in einer anderen Ausführungsform festgesetzt, d.h. nicht drehbar, gelagert sein.

Sofern die Kurbelwelle drehbar gelagert ist, ist die Kurbelwelle mit einer Übersetzung <0,3 (typischer Wert 0,2-0,25) auf das erste Getriebe übersetzt und der Motor mit einer Übersetzung >3 (typischer Wert 4-5) auf das erste Getriebe übersetzt. Zudem ist die Übersetzung des erfindungsgemäßen Zentralantriebes, d.h. der Ausgangswelle des ersten Getriebes zum Hinterrad i_{An} >1 (typischer Wert i_{An}=2), während bei üblichen Zentralantrieben eine Untersetzung von ca. i_{An} =0,5 erforderlich ist.

Die Erfindung bzw. ihre Ausführungen/Ausgestaltungen führen zu folgenden Vorteilen:
- die Kraftübertragung des Elektromotors auf das Hinterrad kann mit weniger Übersetzungsstufen realisiert werden als bei herkömmlichen Zentralmotoren, da die Anzahl der Übersetzungsstufen weniger ist, wenn die Kurbelwelle auf die Krafteinwirkungsachse des Elektromotors zuvor ins Schnelle übersetzt wird.
- zudem wird durch die Integration der Nabenschaltung/des Getriebes im Zentralbereich das Eingangsdrehmoment des Getriebes signifikant reduziert. Die Eingangsdrehzahl des Getriebes ist annähernd Faktor 4 höher (i-_{An}=2 / iₐₙ=0,5), das Eingangsdrehmoment des Getriebes bei gegebener Leistung um den Faktor 4 niedriger. Die Baugröße der Getriebe wird durch das wirkende Drehmoment bestimmt. Damit kann das Getriebe verkleinert werden bzw. das Gesamtantriebsmoment signifikant erhöht werden im Vergleich zu am Hinterrad angeordneten Getrieben,
- das Antriebssystem ist modular aufgebaut und kann durch geringe Modifikation zu einem reinen E-Bike Antrieb ohne Pedale (mit feststehenden Fußrasten) umgebaut werden,
- das Hinterrad ist frei von Schaltelementen und kann einfacher und belastbarer ausgeführt werden,
- Es können Standardketten aus dem Motoradbereich eingesetzt werden, da keine Einschränkung durch am Markt verfügbare Schaltungen mehr gegeben ist,
- deutlich verringerte Belastung auf die einzelnen Komponenten des Antriebssystems, insbesondere wird die die Ausgangswelle des ersten Getriebes mit dem Hinterrad verbindende Kette geringer belastet (kleinere Zugkräfte), wodurch ein signifikant höheres Drehmoment an der Hinterachse bei gleicher Kettenwahl möglich ist,
- die Drehzahl des Antriebsmotors muss nicht zwingend auf die Kurbelwellendrehzahl übersetzt werden, was bei herkömmlichen Pedelecs typischerweise mit Übersetzungen von 20:1-30:1 erforderlich ist; somit einfachere Gestaltung da Drehmoment nicht auf Kurbelwelle, sondern auf das Getriebe und in einer weiteren Stufe auf die Hinterachse übersetzt wird,
- Motordrehzahl des Antriebsmotors ist nicht begrenzt, da Drehzahl nicht auf Kurbelwelle übertragen wird; somit kann eine hohe Motordrehzahl gewählt werden, wodurch größere Drehmomente erzielbar sind.

Insgesamt führt die Ausführung des Antriebssystems zu einem sehr effizienten und kompakten Antrieb mit hohem Wirkungsgrad sowie hoher Leistung bei geringem Gewicht.

Im Sinne des Einsatzes von Standardschaltungen, d.h. stufenlose Getriebe mit Kugeln mit nur einem Eingangsritzel, ist die Einführung einer Zwischenwelle erforderlich. Dies hat zwar einen geringen Wirkungsgradnachteil, ermöglicht jedoch eine weitere interne Übersetzung und somit höhere Kräfte am Hinterrad bzw. kleine Primärübersetzungszahnräder. Zudem können die Bauelemente so angeordnet werden, dass das Antriebsmodul sehr schmal baut, was insbesondere bei Pedelecs gewünscht ist, aufgrund der Ergonomie.

Ein wichtiges Merkmal des Antriebssystems ist die kompakte Anordnung der Antriebselemente in einer Dreieck-Konfiguration.

Zudem wird mit Ausgestaltungen der Erfindung eine einfache, effiziente Kühlung des Antriebsmoduls realisiert.

Im Sinne einer modularen Bauweise kann das Antriebssystem für eine reines E-Bike ohne Pedale modifiziert werden, in dem die Kurbelwelle durch eine feststehende Welle ersetzt wird und an der Welle Fußrasten anbringt. Bei einer derartigen Ausführung ist es sinnvoll, eine Übersetzung zwischen Zwischenwelle und Getriebe von größer 1 zu wählen, damit durch den Einsatz eines hochdrehenden Motors die Leistung weiter gesteigert werden kann, bei ansonsten unverändertem Antriebssystem.

Das Antriebsmodul ist zudem durch eine Sandwichplattenkonstruktion sehr leicht ausgeführt und ermöglicht eine leichte Montage und eine Wartungsfreundlichkeit durch steckbare Antriebsmotoren sowie leichte Zugänglichkeit der Antriebselemente.

Ein erfindungsgemäß ausgeführtes Antriebssystem ermöglicht verschiedene unterschiedliche Betriebsmodi:
- In einem ersten Betriebsmodus wird das Pedelec oder E-Bikerein mechanisch über die Kurbelwelle angetrieben.
- (S)-Pedelec-Betriebsmodus:
   Kurbelwellendrehmomentverstärkung: Motor speist Drehmoment zu, in Abhängigkeit des gemessenen Drehmomentes der Kurbelwelle. Dies ist der typische Pedelec-Betriebsmodus
- E-Bike-Betriebsmodus: rein elektrische Steuerung. Motor treibt das E-Bike an, unabhängig von Kurbelwellendrehzahl und Drehmoment. Dies ist der rein elektrische Betrieb, in der die Kurbelwelle still steht.

Zudem können neuartige innovative Betriebsstrategien realisiert werden:
- GUMode1: Mechanischer Betrieb mit Unterstützung durch Elektromotor in einer Form, dass die Verlustleistung des Antriebsstranges kompensiert wird bzw. wahlweise der Rollwiderstand kompensiert wird. Die Unterstützung des Elektromotors wird entsprechend der drehzahlabhängigen Verluste des Antriebssystems eingestellt. Damit wird eine entsprechende Leichtgängigkeit und geringes Gewicht des Pedelecs oder E-Bikes dem Fahrer suggeriert.
- GUMode2: Komplette Fahrwiderstandskompensation durch Auswertung von zusätzlicher Sensorik (Gyrosensor) zur Ermittlung der Steigung. In diesem Fall wird ein Pedelec- oder E-Bike-Modell mit berechnet, in dem die Fahrwiderstände (Luftwiderstand, Rollreibung, Hangabtriebskraft) ermittelt werden und der Motor entsprechend unterstützt.
- GUMode3: Sportmodus durch Einstellung der gewünschten Leistung und entsprechende Unterstützung des Motors entsprechend der Auswertung des Pedelec- oder E-Bike-Modells.

Der erfindungsgemäße Antrieb und seine Ausführungen haben folgende Vorteile gegenüber alternativen Antriebssystemen:
- kompakte Bauweise
- geringes Gewicht
- modularer Aufbau für Pedelec und E-Bike
- hohe Beschleunigung und Steigfähigkeit
- geringere thermische Belastung
- kostengünstiger Rahmenbau
- Umsetzung einer Vielzahl von Betriebsarten in einem Pedelec oder E-Bike,
einem Antriebssystem

Der Antriebsmotor kann vorteilhaft eine Kühlung aufweisen, wobei insbesondere ein Kühlkanal vorgesehen ist, der durch Leitbleche gebildet wird, die im Rahmen zwischen den Rahmenplatten eingesetzt sind, wobei der Lufteintritt an der Oberseite des Rahmens ist und nach unten abgelenkt wird und das Gehäuse des Antriebsmotors kühlt.

Das erfindungsgemäße Antriebssystem mit einem Antriebsmotor und einer Kurbelwelle und einem Getriebe kann für ein Pedelec oder E-Bikegenutzt werden, welches rein mechanisch, insbesondere über die Kurbelwelle, angetrieben ist.

Ebenso ist es möglich, dass das Antriebssystem mit einem Antriebsmotor und einer Kurbelwelle und einem Getriebe eine Kurbelwellendrehmomentverstärkung aufweist, wobei insbesondere der Antriebsmotor ein Drehmoment erzeugt und über das zweite Getriebe in Abhängigkeit des gemessenen Drehmomentes der Kurbelwelle zu speist.

Auch ist es möglich, dass das Antriebssystem das Pedelec oder E-Bike rein elektrisch antreibt, wobei insbesondere der Antriebsmotor das Pedelec oder E-Bike unabhängig von der Kurbelwellendrehzahl und dem Kurbelwellendrehmoment antreibt.

Auch kann das Antriebssystem dazu verwendet werden, dass bei einem mechanischen Betrieb eine Unterstützung durch den Elektromotor erfolgt, wobei insbesondere die Verlustleistung des Antriebsstranges kompensiert bzw. wahlweise der Rollwiderstand des Pedelec oder E-Bikes kompensiert wird.

Vorteilhaft ist es, wenn zumindest der ganze Fahrwiderstand mittels des Elektromotors kompensiert wird, insbesondere mittels Auswertung zusätzlicher Sensorik (wie Gyrosensor) zur Ermittlung der Fahrbahnsteigung. Hierzu kann vorteilhaft optional ein Pedelec- oder E-Bike-Modell mit berechnet werden, wobei die Fahrwiderstände (wie Luftwiderstand, Rollreibung und Hangabtriebskraft) ermittelt werden und der Motor entsprechend unterstützend wirksam wird. So kann eine gewünschte Leistung einstellbar sein und eine entsprechende Unterstützung durch den Antriebsmotor entsprechend der Auswertung des Pedelec- oder E-Bike-Modells erfolgen.

Der Antriebsmotor kann vorteilhaft mit integrierter Elektronik als Stecklösung ausgeführt sein.

### Figurenbeschreibung

Ausführungsbeispiele der Erfindung und ihrer Ausgestaltungen sind in der nachfolgenden Figurenbeschreibung unter Bezugnahme auf die Zeichnung näher beschrieben.

Es zeigen:
- **Fig. 1:**: den Grundaufbau des Antriebsystems mit Sensorik für einen Pedelec-Betrieb;
- **Fig. 1a:**: den Grundaufbau des Antriebsystems mit Sensorik für einen E-Bike-Betrieb;
- **Fig. 2:**: einen alternativen Aufbau des Antriebssystem mit Zwischenwelle;
- **Fig. 2a:**: den alternativen Aufbau des Antriebsystems mit Zwischenwelle für einen E-Bike-Betrieb;
- **Fig. 3:**: **stellt** die konstruktive Ausführung des Antriebssystems integriert im Fahrzeugrahmen in 3D Darstellung;
- **Fig. 4:**: stellt in einen Längsschnitt durch das Antriebssystem die Kühlung des Antriebes dar;
- **Figur 5a:**: den Grundunterstützungsmodus GUMode1; und
- **Figur 5b:**: **beschreibt** die weiteren Grundunterstützungsmodi GUMode2 und GUMode2.

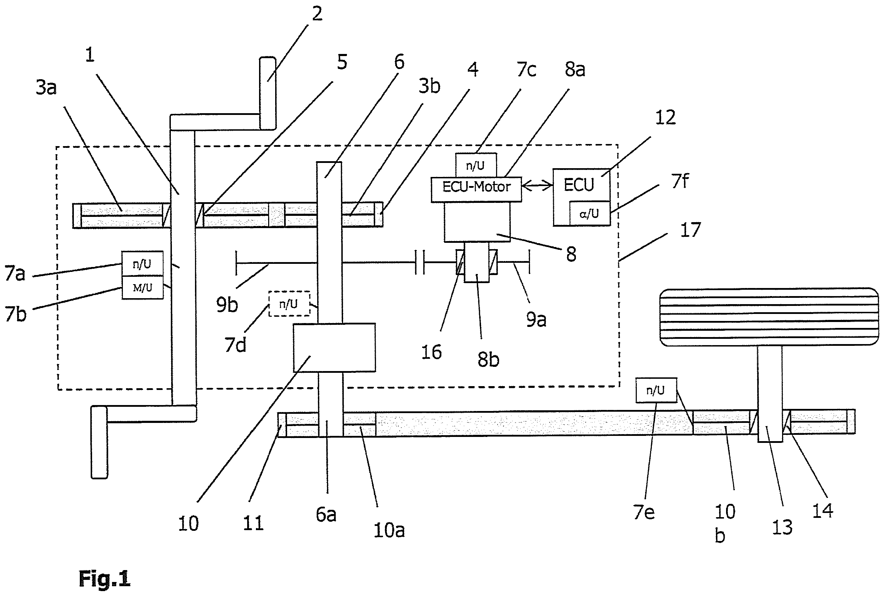

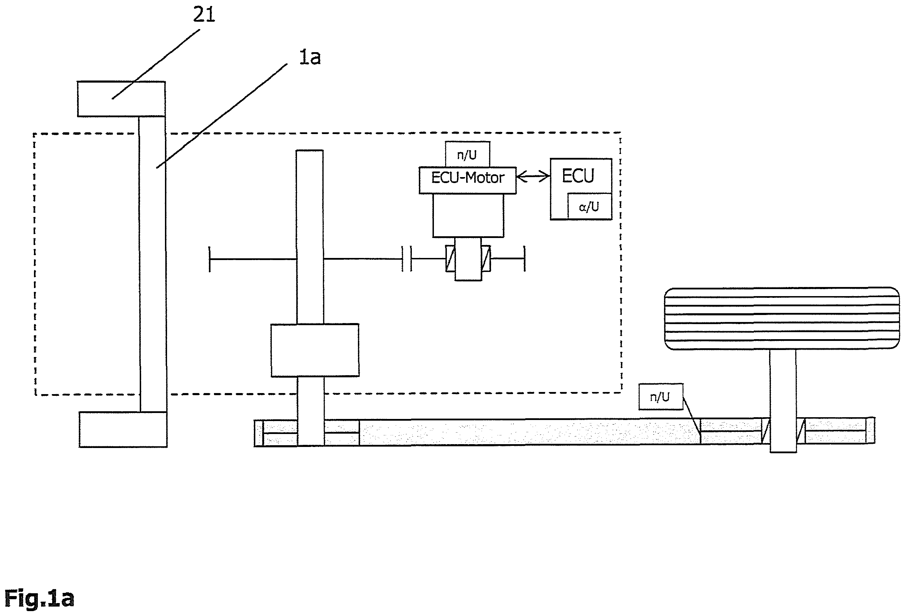

**Fig. 1** zeigt eine erste Ausführung des Antriebssystems. Eine Kurbelwelle 1 mit Pedalen 2 wird über eine Kette oder Riemen 4 und zwei Ritzel 3a und 3b auf eine Welle 6 ins Schnelle übersetzt (d.h. **i_{KW->ZW} = n₃ₐ** / **n_{3b} < 1).** Einer oder zwei Sensoren (vorzugsweise in einer Baugruppe zusammengefasst) erfassen Drehzahl 7a und Drehmoment 7a der Kurbelwelle. Drehzahl und Drehmoment werden vorzugsweise berührungslos durch Auswertung des Magnetfeldes einer magnetisierten Kurbelwelle bestimmt. Die Kurbelwelle ist im Bereich der Sensoren magnetisiert. Zwischen Kurbelwelle 1 und Zentralwelle 6 ist ein Freilauf 5 auf der Kurbelwelle integriert. Ein Elektromotor 8 mit Motorsteuerelektronik (Motor-ECU) 8a, Drehzahlsensor 8b mit einer Abtriebswelle 8c wird über eine Getriebestufe mit zwei Zahnrädern 9a und 9b ins Langsame übersetzt (d.h. **i_{MW->ZW} = n₉ₐ /n_{9b} > 1).** Wobei n₉ₐ und 9_{nb} die Drehzahlen der Wellen sind. Die Übersetzung i zwischen der Eingangswelle und seiner Ausgangswelle eines Getriebes ist im Sinne der Erfindung größer 1, wenn die Eingangswelle sich schneller dreht als die Ausgangswelle des Getriebes. Das Motorzahnrad 9a ist zweckmäßig aus Metall, das zweite Zahnrad auf der Zentralwelle aus Leichtmetall (Aluminium, Magnesium oder hochfesten Kunststoff (auch Kunststoff/Karbon). Die Zahnräder sind aus Geräuschgründen, insbesondere bei einer Ausführung des Zahnrades 9b aus Leichtmetall, vorzugsweise schrägverzahnt. Die Übersetzung **i_{KW->ZW}** der Drehzahlen zwischen Kurbelwelle und Zentralwelle 6 liegt bei kleiner 0,4 (typischer Wert: 0,2-0,3), die Übersetzung **i_{MW->ZW}** der Drehzahlen zwischen Motorwelle und Zentralwelle 6 bei größer 3 (typischer Wert: 4-5). Zwischen Motorwelle 8c und Motorzahnrad 9a ist ein weiterer Freilauf 16 integriert bzw. alternativ eine schaltbare Kupplung. Auf den Freilauf kann auch verzichtet werden. Die Zentralwelle 6 wirkt auf ein Getriebe 10, das vorzugsweise stufenlos ausgeführt ist. Eine weitere Sensorik 7d (optional) misst die Drehzahl der Zentralwelle. Die Abtriebswelle 6a des Getriebes ist mit einem Ritzel 10a verbunden, dass über einen Riemen 11 mit der Radwelle 13 über ein Radritzel 10b verbunden ist. Die Übersetzung geht ins Langsame, d.h. **i_{An}** = n₁₀a / n_{10b} > 1 (typisch üblich ist ein Verhältnis i n_{10b}/n₁₀ₐ von ca. 2-bei Fahrzeugen bis 45km/h und 27 Zoll Rädern). Die Drehzahl des Radritzels 10b wird über einen weiteren Drehzahlsensor 7e erfasst. Der Sensor ist vorzugsweise berührungslos ausgeführt und tastet die Flanken der Ritzel ab. In der Hinterradwelle 13 ist ein weiteres Freilaufelement 14 integriert. Dieses Freilaufelement ermöglicht ein Ausrollen mit hohem Wirkungsgrad, da das Antriebssystem stillstehen kann. Gestrichelt 17 dargestellt ist die als mechanische Einheit zusammengefasste Antriebseinheit.

Werden alle Antriebselemente als Riemen sowie die Zahnräder zwischen Motor und Welle in einer Paarung Kunststoff/Metall ausgeführt, ist das Antriebssystem komplett wartungsfrei.

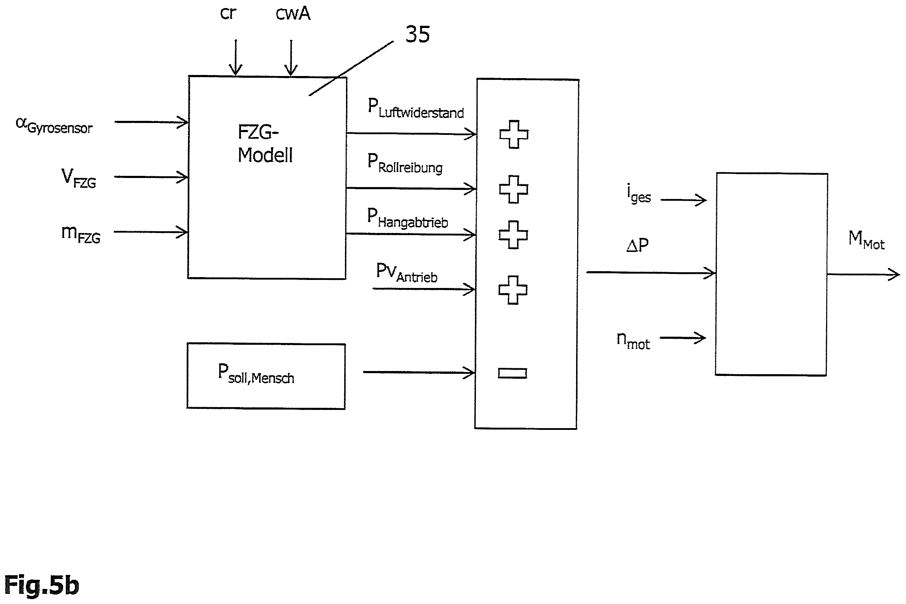

Das Antriebsystem hat zudem eine zentrale Steuerung 12 mit einem Gyrosensor 7f. Über den Gyrosensor wird die Fahrbahnsteigung ausgewertet und für die Steuerung die unterschiedliche Betriebsmodi GUMode2 und GUMode3, die in Fig. 5b beschrieben werden, genutzt.

Der Aufbau des Antriebssystems ermöglicht somit eine Vielzahl von Fahrzeugbetriebsarten in einem Fahrzeug (Betrieb als Pedelec und Betrieb als reinen E-bike, bzw. als Sportgerät) und somit universelle Anwendungsmöglichkeiten. In einem Betriebsmodus Pedelec darf das Fahrzeug gesetzlich legal auf Fahrradwegen gefahren werden, im Betriebsmodus E-Bike auf der Straße entsprechend der L1E-Zulassungsverordnung.

Wird der Freilauf 16 durch eine Kupplung ersetzt, kann der Motor zugeschaltet werden und somit eine Rückgewinnung von Bremsenergie ermöglicht werden. Das gleiche ist umsetzbar durch Weglassen des Motorfreilaufs mit dem Nachteil, dass der Motor mit entsprechendem Schleppmoment mitgedreht werden muss. Dies kann durch entsprechende Stromregelung des Motors (Schleppmomentkompensation) kompensiert werden, so dass es vom Fahrer nicht spürbar ist. Dies erfordert jedoch einen höheren Ruhestrom und geht zu Lasten der Effizienz.

Durch entsprechende Auswertung des Raddrehzahlsensors 7e und der Motordrehzahl 7c kann die Übersetzung des Getriebes ermittelt und dem Fahrer visualisiert werden.

Bei Einsatz des Sensor 7d kann darauf verzichtet werden und eine genauere Bestimmung ist möglich, auch wenn das Fahrzeug rollt bei Stillstand des Motors/ der Kurbelwelle. Sind Wirkungsgrad von Motor und Getriebe bekannt, kann durch eine entsprechende Auswertung der Signale dem Fahrer eine Empfehlung gegeben werden, wie der Wirkungsgrad und die Reichweite gesteigert werden können.

**Fig. 1a** zeigt die Modifikation des Antriebsystems für ein reines E-bike. Dabei werden die Pedale 2 durch Fußrasten ersetzt und die Kurbelwelle 1a wird fest, nicht drehbar, eingespannt. Die Sensoren auf der Kurbelwelle sowie die Übersetzung zur Zentralwelle entfallen. Das Antriebssystem bleibt in seinem sonstigen Aufbau unverändert (wie in Fig. 1 beschrieben).

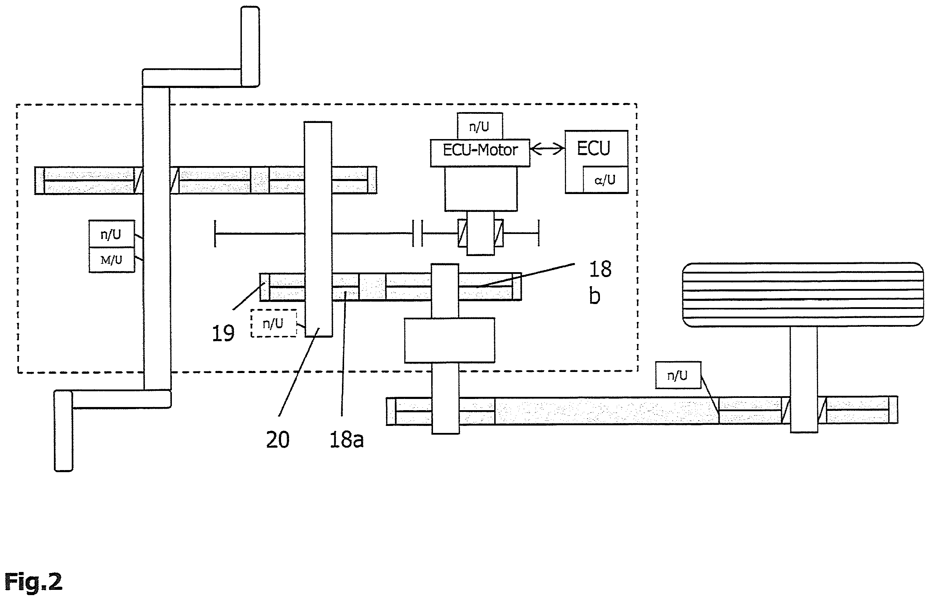

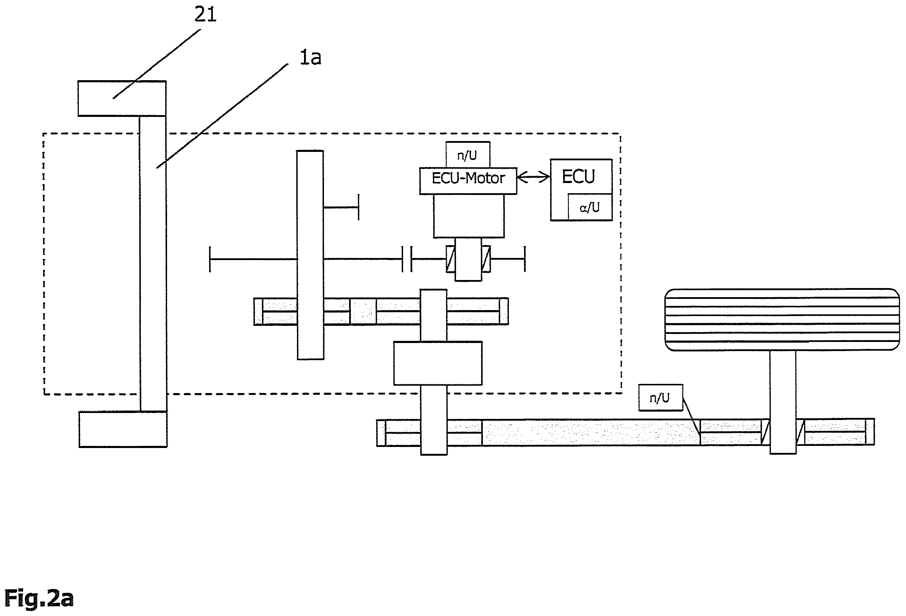

**Fig. 2** zeigt eine alternative Ausführung des Antriebsmoduls mit einer Zwischenwelle 20, über die Motordrehzahl und Kurbelwellendrehzahl zusammengeführt werden und über eine weitere Übersetzung mit einem Riemen oder Kette 19 mit 2 Ritzeln 18a und 18b auf die Eingangswelle 6 des Getriebes geführt werden. Die zusätzliche Zwischenwelle ist erforderlich, wenn Standardkomponenten (z.B. NuVinci-Getriebe) eingesetzt werden, die nur einen Eingang erlauben bzw. höhere Gesamtübersetzungen realisiert werden sollen für höhere Fahrzeugendgeschwindigkeiten bzw. höhere Raddrehzahlen bei kleineren Raddurchmessern. Außerdem kann es erforderlich sein, dass aufgrund 5 der geometrischen Anordnung der Antriebselemente eine Zwischenwelle eine bessere schmalere Anordnung des gesamten Antriebssystems erlaubt. Dies ist insbesondere im Sinne einer sehr schlanken Bauweise des Antriebssystems sinnvoll, die insbesondere bei Pedelecs gewünscht ist.

**Fig. 2a** zeigt die Modifikation des Antriebsystems der Fig. 2 für ein reines E-bike. Dabei werden die Pedale 2 durch Fußrasten ersetzt und die Kurbelwelle 1a wird fest, nicht drehbar, eingespannt. Die Sensoren auf der Kurbelwelle sowie die Übersetzung zur Zentralwelle entfallen. Das Antriebssystem bleibt in seinen sonstigen Aufbau unverändert (wie in Fig. 2 beschrieben).

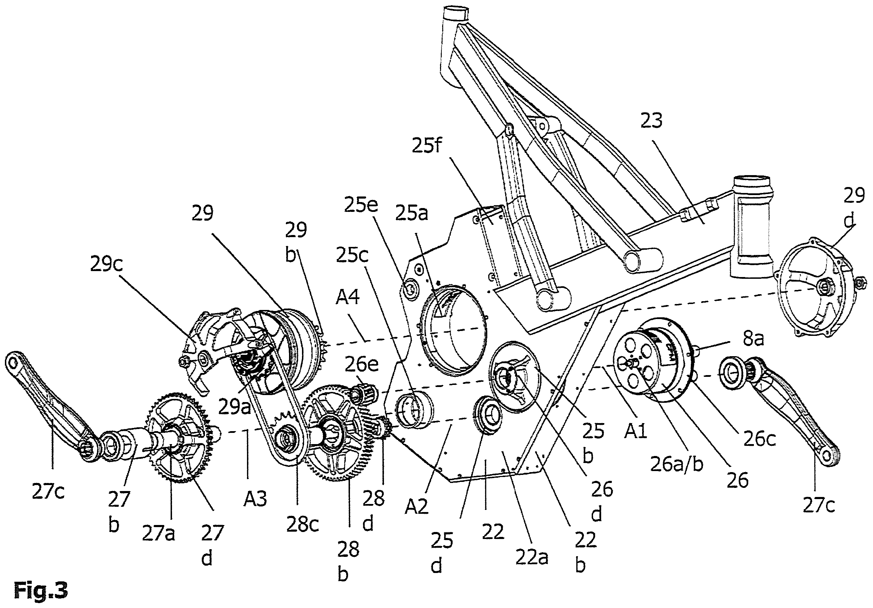

**Fig. 3** zeigt die konstruktive Ausführung des Antriebsmoduls, die räumliche Anordnung der Fahrzeugelemente sowie die Integration in den Fahrzeugrahmen. Der Hauptrahmen des Fahrzeuges besteht aus Antriebsmodulgehäuse 22, Hauptrohr 23 mit Sitzbefestigung 24. Das Antriebsmodulgehäuse setzt sich zusammen aus zwei Platten 22a und 22b sowie diversen Verbindungselemente der Platten für 4 Achsen (Antriebsachse A1, Zwischenwellenachse A2, Kurbelwellenachse A3, Getriebeachse A4). Die Platten werden über verschiedene Teile/Baugruppen, welche die Bauelemente der Achsen aufnehmen, miteinander verbunden. Die Verbindungsteile umfassen ein Rohr für Getriebe 25a, eine Aufnahmebaugruppe 25b für Elektromotor sowie Rohreinsätze für Kurbelwelle 25c und Zwischenwelle 25d und Hinterradschwingenbefestigung 25e. Über die Verbindungselemente und die Platten wird das Antriebsmodulgehäuse gebildet, durch formschlüssige Verbindung der Verbindungselemente mit den Platten. Das Antriebsmodulgehäuse enthält auch eine Aussparung 25f, in dem der Stecker für eine herausnehmbare Batterie angebracht werden kann. Das Antriebsmodulgehäuse ist mit dem Hauptrohr formschlüssig z.B. über Verschwei-βen, Nieten, Schrauben, Kleben verbunden.

Die erste Achse A1 umfasst den Elektromotor 26, der eine Abtriebswelle 26a mit einer Passfeder 26b und einen Flansch 26c aufweist. Der Elektromotor wird in eine Aufnahme 25b gesteckt und an der Platte 22b verschraubt.

Die Aufnahme 25b enthält ein Zahnrad 26e mit einer separaten Lagerung 26d. Die Welle des Antriebsmotors ist somit frei von Radialkräften.

In der zweiten Achse A3 ist die Kurbelwelle 27a, Pedalkurbel 27c, Kurbelwellensensor 27b, die durch das Verbindungselement 25c aufgenommen werden. Auf der Kurbelwellenachse ist ein Kurbelwellenritzel 27d, das im montierten Zustand zwischen den Gehäuseplatten angeordnet ist. Die Achse A3 ist in den Seitenplatten gelagert.

In einer dritten Achse A2 ist die Zwischenwelle 28a angeordnet. Auf der Zwischenwelle sind die Ritzel für Kurbelübersetzung 28d, Zahnrad der Motorübersetzung 28b und Abtriebsritzel 28c zum Getriebe sowie Lagerelemente angeordnet. Alternativ zum Abtriebsritzel kann ein Riemenzahnrad eingesetzt werden. Die Achse A4 ist in den Seitenplatten gelagert.

In der vierten Achse A4 ist das Getriebe 29 anordnet. Die Achse umfasst Getriebe mit Getriebeeingangsritzel 29a und Getriebeausgangsritzel 29b sowie eine Getriebespinne 29c, die das Getriebe aufnimmt und mit dem Rahmen verbindet und die Achse A4 zentriert. Eine zweite Getriebespinne 29d ist auf der Rückseite angeordnet. Alternativ zum Getriebeeingangsritzel kann ein Riemenzahnrad eingesetzt werden. Getriebe und Zwischenwelle und Getriebeeingang sind mit einer Kette bzw. Riemen verbunden.

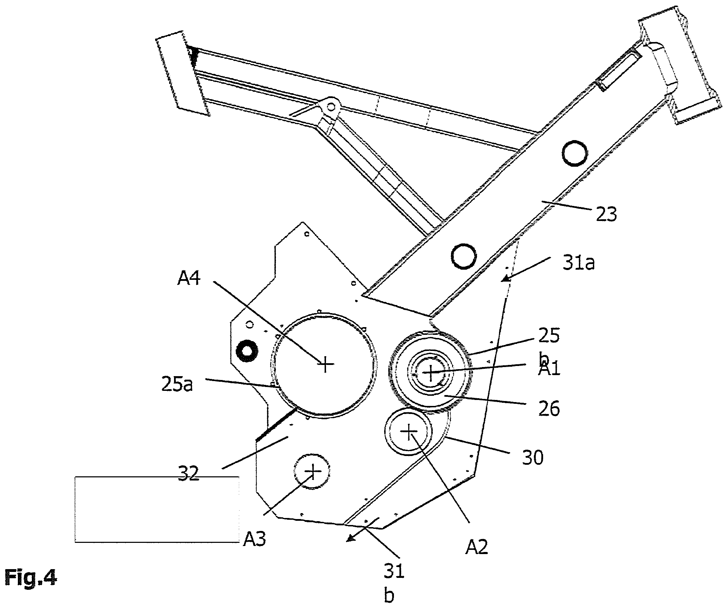

**Fig. 4** zeigt die Kühlung des Antriebssystems. Dargestellt ist ein Schnitt des Antriebsmoduls zwischen den Platten. Zwischen den Platten wird ein Leitblech 30 eingelegt, dass den Fahrzeugluftstrom über den Eingang 31a am Hauptrohr am Gehäuse 25b des Elektromotors vorbeiführt. Die Luft tritt unten im Bereich 31b aus. Der Motor 26, der als Außenläufermotor ausgeführt ist, rotiert im Gehäuse 25b und überträgt die Wärme an das Gehäuse, das über den Luftstrom effizient gekühlt wird. Antriebselemente im Trockenraum 32 sind zudem durch das vor dem Einfluss von Schmutz geschützt. Schmutz, der sich im Kanal ansammelt, kann einfach über einen Dampfstrahler ausgewaschen werden.

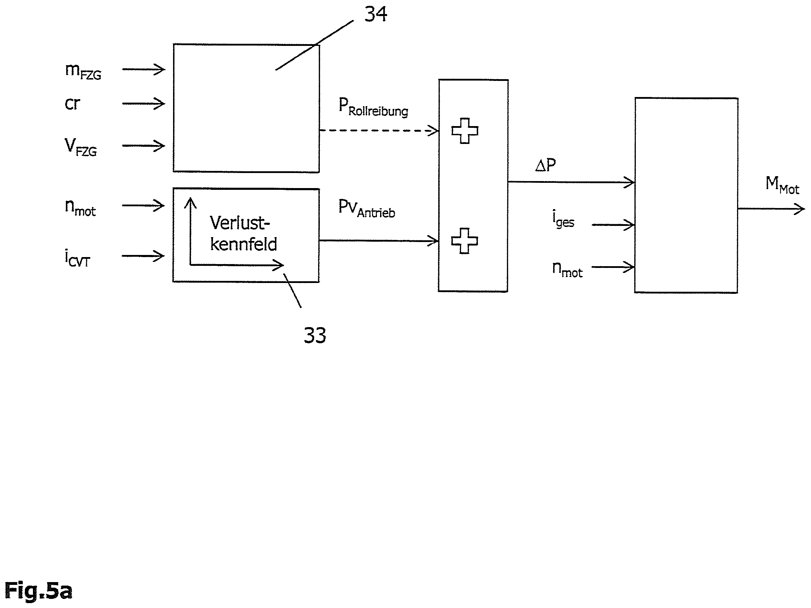

**Fig. 5a** beschreibt den Grundunterstützungsmodus GUMode1. In dem Grundunterstützungsmodus wird für das Pedelec oder E-Bikeder Antriebsverlust des Antriebes in einem Verlustkennfeld 33 abhängig von der Getriebeübersetzung i_{CVT} und der Motordrehzahl nₘₒₜ offline bestimmt. Im Fahrbetrieb wird aus der realen Drehzahl des Motors nₘₒₜ die Verlustleistung P_{V,Antrieb} bestimmt. Entsprechend der Gesamtübersetzung i_{ges} und der Motordrehzahl nₘₒₜ kann das Motordrehmoment Mₘₒₜ berechnet werden, das zur Kompensation der Verluste benötigt wird. Durch diese Grundsteuerung wird das Pedelec oder E-Bike sehr leichtgängig und kompensiert, weitestgehend das höhere Gewicht des Fahrzeuges mit Antriebssystem und Akku. Der Betriebsmodus ist auch möglich in einem Reservebetrieb, wenn die Batterie nahe der Betriebsspannungsuntergrenze betrieben wird und nur der mechanische Betrieb mit geringer Leistung noch möglich ist. Damit wird die Belastung beim Fahren ohne Akku reduziert.

Ergänzend zur Verlustkompensation ist es sinnvoll, die Rollwiderstandsverluste P_{Rollreibung} zu berechnen und zu kompensieren. Der Rollwiderstandsverlust kann mit 34 aus den fahrzeugspezifischen Werten Rollreibbeiwert er und Fahrzeuggewicht m_{FZG} ermittelt werden. Dieser Betriebsmodus erhöht die Leichtgängigkeit bei zunehmender Geschwindigkeit. Die Widerstandserhöhung durch zunehmende Fahrzeuggeschwindigkeit (Luftwiderstand erhöht sich quadratisch zur Geschwindigkeit) wird damit abgemindert und ermöglich dem Fahrer eine erhöhte Fahrzeugendgeschwindigkeit mit Muskelkraft.

Eine Variante des GuModesl ist die Rast- und Schleppverlustkompensation des Elektromotors zusätzlich zur Kompensation der Antriebsverluste. Dies wird eingesetzt bei Verzicht auf Freilaufes 16 zwischen Motorwelle und Zentralwelle und ermöglicht auch bei fest gekoppelten Motor eine Leichtgängigkeit des Fahrzeuges sowie eine aktive Rückgewinnung von Bremsenergie.

**Fig. 5b** beschreibt einen weiteren Grundunterstützungsmodus GUMode2, in dem die gesamten Verluste des Fahrzeuges über ein Fahrzeugmodell 35 ermittelt werden. Eingangsgrößen für das Fahrzeugmodell sind Steigung a_{Gyrosensor} (ermittelt mit Gyrosensor 7f), v_{FZG}, m_{FGZ}, cr und Luftwiderstandsbeiwert cwA sowie die Antriebsverluste P_{vAntrieb} (siehe Beschreibung Fig. 5a).

Die gesamten Verluste werden aufsummiert und können entsprechend der Gesamtübersetzung i_{ges} und der Motordrehzahl in ein Unterstützungsdrehmoment des Motors Mₘₒₜ ungerechnet werden.

Zusätzlich soll es möglich sein, in einem weiteren Betriebsmodus GUMode3 eine Sollunterstützung einzustellen P_{soll,Mensch}, um die das Unterstützungsdrehmoment des Motors Mₘₒₜ reduziert wird. Dieser Betriebsmodus erlaubt einen Sportbetrieb mit konstanter Leistungseinstellung. Damit wird eine Unterstützung unabhängig von Fahrbahn und Fahrzeuggeschwindigkeit gewährleistet und die Einstellung einer konstanten Pulsrate des Fahrers mehr oder weniger gewährleistet. Dies ist bekanntlich gesundheitsfördernd und soll Spitzenbelastungen (z.B. bei extremer Bergfahrt) vermindern. GUMode3 ermöglicht den Betrieb des Fahrzeuges als mobiles Fitnessgerät.

### Bezugszeichenliste

- 1, 1a: Kurbelwelle
- 2: Pedal
- 3a: Kurbelwellenritzel
- 3b: Getriebewellenritzel
- 4: Riemen
- 5: Freilauf
- 6: Zentralwelle
- 6a: Getriebeausgangswelle
- 7a: Drehzahlsensor für Kurbelwelle
- 7b: Drehmomentsensor für Kurbelwelle
- 7c: Drehzahlsensor Elektromotor
- 7d: Drehzahlsensor Zentralwelle
- 7e: Drehzahlsensor Hinterradritzel
- 7f: Gyrosensor
- 8: Antriebs-bzw. Elektromotor
- 8a: Ansteuerelektronik Elektromotor
- 8b: Drehzahlsensor Elektromotor
- 8c: Ausgangswelle Elektromotor
- 9a: Motorwellenzahnrad
- 9b: Zentralwellenzahnrad
- 10: Getriebe
- 10a: Ritzel der Getriebeausgangswelle
- 10b: Radritzel
- 11: Riemen/ Kette zum Hinterrad
- 11: Antriebsriemen/ Antriebskette
- 12: Zentrale Steuerung
- 13: Hinterradwelle
- 14: Radfreilauf
- 15: Hinterrad
- 16: Freilauf Elektromotor
- 17: Antriebsystemeinheit
- 18a: Ritzel Zwischenwelle
- 18b: Ritzel Getriebeeingangswelle
- 19: Riemen/ Kette zwischen Zwischenwelle und Getriebewelle
- 20: Zwischenwelle
- 21: Fußrasten
- 22: Antriebsmodulgehäuse
- 22a: Antriebsmodulplatte
- 22b: Antriebsmodulplatte
- 23: Hauptrohr
- 24: Sitzbefestigung
- 25a: Rohr für Getriebe
- 25b: Aufnahmebaugruppe für Elektromotor
- 25c: Rohreinsatz für Kurbelwelle
- 25d: Rohreinsatz für Zwischenwelle
- 25e: Einsatz für Befestigung der Hinterradschwinge
- 25f: Aussparung für Batteriestecker
- 26: Elektromotor
- 26a: Welle des Elektromotors
- 26b: Passfeder
- 26c: Motorflansch
- 26d: Motoraufnahme mit Lagerung
- 26e: Motorabtriebszahnrad
- 27a: Kurbelwelle
- 27b: Kurbelwellensensor
- 27c: Pedalkurbel
- 27d: Kurbelwellenritzel
- 28a: Zwischenwelle
- 28b: Zahnrad für Motorübersetzung
- 28c: Abtriebsritzel, Abtriebsriemenrad
- 29: Getriebe
- 29a: Getriebeeingangsritzel
- 29b: Getriebeausgangsritzel
- 29c: Getriebespinne
- 29d: zweite Getriebespinne
- 30: Leitblech
- 31a: Eintritt des Luftstromes
- 31b: Austritt des Luftstromes
- 32: Trockenraum zwischen den Seitenplatten für Anordnung von Sensoren und Antriebselementen
- 33: Verlustkennfeld
- 34: Berechnung Rollwiderstandsverlustleistung
- 35: FZG-Modell
- i_{An}: Übersetzungsverhältnis Antrieb/Getriebeausgangswelle auf Hinterrad
- i_{MW->ZW}: Übersetzungsverhältnis Motorwelle auf Zentralwelle
- i_{KW->ZW}: Übersetzungsverhältnis Kurbelwelle auf Zentralwelle
- i_{CVT}: Getriebeübersetzung eines stufenlosen Getriebes
- i_{ges}: Gesamtübersetzung
- cr: Rollwiderstandsbeiwert
- cwA: Luftwiderstandsbeiwert
- m_{FZG}: Fahrzeuggewicht
- v_{FZG}: Fahrzeuggeschwindigkeit
- nₘₒₜ: Motordrehzahl
- P_{v,Antrieb}: Antriebsverluste Antrieb
- P_{Rollreibung}: Rollwiderstandsverlustleistung
- M_{Mot}: Motordrehmoment
- dP: Differenzleistung
- a_{Gyrosensor}: Steigung ermittelt aus Gyrosensor
- P_{soll,Mensch}: gewünschte konstante Leistung Mensch
- A1: Motorantriebsachse
- A2: Zwischenwellenachse
- A3: Kurbelwellenachse
- A4: Getriebeachse

## Patentansprüche

1. Antriebssystem für ein Pedelec oder E-Bike mit einem Elektromotor als Antriebsmotor (8), einer drehbar gelagerten Tretkurbelwelle (1) und einem ersten Getriebe (10), wobei das erste Getriebe (10) und der Antriebmotor (8) im Mittelbereich des Fahrzeuges angeordnet sind, der Antriebsmotor (8) über ein zweites Getriebe (9a, 9b) mit einer Zentralwelle (6, 20) in Verbindung ist, wobei die Zentralwelle (6, 20) direkt oder über ein drittes Getriebe (18a, 18b, 19) mit dem Eingang des ersten Getriebes (10) in Verbindung ist bzw. dessen Eingangswelle bildet, und dass die Ausgangswelle (6a) des ersten Getriebes (10) über ein viertes Getriebe (10a, 10b, 11) mit der Hinterradwelle (13) des Fahrzeugs verbunden bzw. verbindbar ist, wobei das erste Getriebe (10) ein Schaltgetriebe mit mehreren Gängen, insbesondere ein Nabengetriebe oder ein stufenloses Schaltgetriebe (CVT) ist, wobei ein Steuerungscomputer das erste Getriebe (10) schaltet, **dadurch gekennzeichnet, dass** die Drehzahl der Tretkurbelwelle (1) mit einer Übersetzung kleiner 0,3, insbesondere zwischen 0,2 bis 0,25 auf den Eingang des ersten Getriebes (10) übersetzt und die Drehzahl des Antriebsmotors (8) mit einer Übersetzung größer 3, insbesondere zwischen 4 bis 5, auf den Eingang des ersten Getriebes (10) übersetzt ist, wobei ein viertes Getriebe (10a, 10b, 11) die Drehzahl der Ausgangswelle (6a) des ersten Getriebes (10) auf das angetriebene Hinterrad mit einer Übersetzung von größer 1, insbesondere größer 1,5, überträgt.

2. Antriebssystem nach Anspruch 1, **dadurch gekennzeichnet, dass** das zweite Getriebe (9a, 9b) ein ein- oder mehrstufiges, insbesondere zweistufiges, Getriebe, insbesondere in Form eines festen Zahnradgetriebes oder Zahnriemengetriebes, ist.

3. Antriebssystem nach Anspruch 1 oder 2, **dadurch gekennzeichnet, dass** die Tretkurbelwelle (1) über ein fünftes Getriebe (3a, 3b, 4), insbesondere ein Zahnriemen- oder Zahnradgetriebe, mit der Zentralwelle (6, 20) verbunden oder koppelbar ist.

4. Antriebssystem nach einem der Ansprüche 1 bis 3, **dadurch gekennzeichnet, dass** die Motorausgangswelle (8c), die Zentralwelle (6, 20) und die Tretkurbelwelle (1) die Getriebeausgangswelle (6c) durch separate Achsen gebildet sind, die insbesondere getrennt gelagert sind und/oder das Antriebssystem modular aufgebaut ist.

5. Antriebssystem nach einem der vorhergehenden Ansprüche, **dadurch gekennzeichnet, dass** das zweite Getriebe (9a, 9b) die Kraft bzw. das Drehmoment des Antriebsmotors (8) auf die Zentralwelle (6, 20) überträgt, und das fünfte Getriebe (3a, 3b, 4) die Kraft bzw. das Drehmoment der Tretkurbelwelle (1) auf die Zentralwelle (6, 20) überträgt.

6. Antriebssystem nach einem der vorhergehenden Ansprüche, **dadurch gekennzeichnet, dass** ein Freilauf (5) vorgesehen ist, der insbesondere zwischen der Tretkurbelwelle (1) und der Zentralwelle (6, 20) angeordnet ist, derart, dass kein Drehmoment von der Zentralwelle (6, 20) auf die Tretkurbelwelle (1) übertragen wird und/oder dass ein Freilauf/Kupplungselement (16) zwischen der Ausgangswelle (8c) des Antriebsmotors und der Zentralwelle (6, 20) angeordnet ist.

7. Antriebssystem nach einem der vorhergehenden Ansprüche, **dadurch gekennzeichnet, dass** das zweite Getriebe (9a, 9b) die Drehzahl des Antriebsmotors (8) mit einer Übersetzung i_{MW->ZW} >3, vorzugsweise zwischen 4 und 6, bevorzugt zwischen 4 und 5, auf die Zentralwelle (6, 20) übersetzt, d.h. die Welle des Antriebsmotors (8) dreht sich schneller als die Zentralwelle (6, 20).

8. Antriebssystem nach einem der vorhergehenden Ansprüche, **dadurch gekennzeichnet, dass** das dritte Getriebe (18a, 18b, 19), insbesondere in Form eines Ketten-, Zahnrad- oder Riemengetriebes, die Drehzahl der Zentralwelle (6, 20) mit einer Übersetzung >1 auf die Getriebeeingangswelle des ersten Getriebes (10) übersetzt.

9. Antriebssystem nach einem der vorhergehenden Ansprüche, **dadurch gekennzeichnet, dass** die Drehzahl der Tretkurbelwelle (1) über das fünfte Getriebe (3a, 3b, 4) mit einer Übersetzung <0,4, vorzugsweise zwischen 0,2 und 0,3, auf die Zentralwelle (6, 20) oder über eine Zwischenwelle (20) auf den Eingang des Getriebes (10) wirkt.

10. Antriebssystem nach einem der vorhergehenden Ansprüche, **dadurch gekennzeichnet, dass** die Drehzahl der Ausgangswelle (6a) des ersten Getriebes (10) über das vierte Getriebe (10a, 10b, 11), mit einem Riemen oder Kette (11), auf das angetriebene Rad übertragen wird.

11. Antriebssystem nach einem der vorhergehenden Ansprüche, **dadurch gekennzeichnet, dass** die Tretkurbelwelle (1a) festgesetzt und damit nicht drehbar ist, wobei an der Tretkurbelwelle Pedale (21) angeordnet sind.

12. Antriebssystem nach einem der vorhergehenden Ansprüche, **dadurch gekennzeichnet, dass** das Antriebssystem eine separate Einheit mit einem Antriebsmodulgehäuse (22) bildet, welche in ein ein Pedelec oder E-Bike, einbaubar ist, wobei insbesondere in dem Antriebsmodulgehäuse (22) der Antriebsmotor (8) sowie das erste Getriebe (10), das zweite Getriebe und das dritte Getriebe angeordnet ist.

13. Antriebssystem nach Anspruch 12, **dadurch gekennzeichnet, dass** das Antriebsmodulgehäuse (22) zwei Seitenplatten (22a, 22b) aufweist, die mittels Verbindungselementen verbunden sind, wobei die Verbindungselemente insbesondere Rohreinsätze (25a- 25d) sind, die die Seitenplatten (22a, 22b) insbesondere in Sandwichbauweise miteinander verbinden.

14. Antriebssystem nach einem der vorhergehenden Ansprüche, **dadurch gekennzeichnet, dass** die Antriebselemente im bzw. am Rahmen des Fahrzeuges angeordnet bzw. anordbar sind, insbesondere in einer DreieckAnordnung, wobei der Antriebsmotor (26) in Fahrrichtung vorne angeordnet ist und das Getriebe (29) in Fahrrichtung hinten und dass die Kurbelwelle (27a) unterhalb des Getriebes (29) und des Antriebsmotors (26) angeordnet ist.

15. Antriebssystem nach einem der vorhergehenden Ansprüche, **dadurch gekennzeichnet, dass** der Antriebsmotor (26) steckbar befestigt ist, insbesondere über eine Passfederwelle (26b) oder Welle mit Spline, wobei das Abtriebszahnrad (26d) des Elektromotors (26) im bzw. am Rahmen des Fahrzeugs gelagert ist und/oder dass das Antriebsmotor- bzw. Elektromotorgehäuse (22) zwei Platten (22a, 22b) und Verbindungselemente, wie Rohreinsätze (25a- 25d), welche die Platten in Sandwichbauweise miteinander verbinden (Rohre für Getriebe, Elektromotor, Wellen) aufweist, insbesondere in einer Schweiß-/Nietverbindung mit Stecker für Batterie und wobei der Antriebsmotor (26) mit dem Hauptrohr (23) des Fahrzeuges verbunden ist.

16. Ein Pedelec oder E-Bike, mit einem Antriebssystem nach einem der Ansprüche 1 bis 15.

17. Verfahren zum Betrieb eines Pedelec oder E-Bikes, mit einem Antriebssystem nach einem der Ansprüche 1 bis 15, **dadurch gekennzeichnet, dass** das Fahrzeug in einem und/oder mehreren der nachfolgenden Betriebsmodi betreibbar ist:
a) in einem ersten Betriebsmodus das Fahrzeug rein mechanisch über die Tretkurbelwelle angetrieben wird;
b) in einem zweiten Betriebsmodus eine Tretkurbelwellendrehmomentverstärkung erfolgt, wobei der Motor ein Drehmoment in Abhängigkeit des gemessenen Drehmomentes der Tretkurbelwelle zu speist (typischer Pedelec-Betriebsmodus);
c) in einem dritten E-Bike-Betriebsmodus eine rein elektrische Steuerung erfolgt, wobei der Motor das Fahrzeug unabhängig von Kurbelwellendrehzahl und Drehmoment, insbesondere bei Stillstand der Kurbelwelle, antreibt.

18. Verfahren nach Anspruch 17, zum Betrieb eines E-Bikes oder Pedelec mit Tretkurbelwelle und Elektromotor sowie mit einem Steuerungscomputer, wobei in einem Betriebsmodus (GUMode1) ein mechanischer Betrieb mit Unterstützung durch Elektromotor derart erfolgt, dass die Verlustleistung des Antriebsstranges und/oder der Rollwiderstand mittels des Elektromotors kompensiert wird, und
dass die
Unterstützung des Elektromotors entsprechend der drehzahlabhängigen Verluste des Antriebssystems eingestellt wird, derart, dass eine entsprechende Leichtgängigkeit und geringes Gewicht des Fahrzeuges dem Fahrer suggeriert wird.

19. Verfahren nach einem der Ansprüche 17 oder 18, **dadurch gekennzeichnet, dass** in einem weiteren Betriebsmodus (GUMode2) eine komplette Fahrwiderstandskompensation durch Auswertung von zusätzlicher Sensorik, eines Gyrosensors, zur Ermittlung der Steigung der Fahrbahn erfolgt, wobei hierzu ein Fahrzeugmodell mit berechnet wird, in dem die Fahrwiderstände in Form von Luftwiderstand, Rollreibung, Hangabtriebskraft, ermittelt werden und der Motor entsprechend unterstützt.

20. Verfahren nach einem der Ansprüche 17 bis 19, **dadurch gekennzeichnet, dass** in einem weiteren Betriebsmodus (GUMode3) durch Einstellung der gewünschten Leistung eine entsprechende Unterstützung durch den Motor mittels entsprechend Auswertung des Fahrzeugmodells, erfolgt.

## Claims

1. Drive system for a pedelec or e-bike with an electric motor as the drive motor (8), a rotatably mounted pedal crankshaft (1) and a first transmission (10), wherein the first transmission (10) and the drive motor (8) are arranged in the central region of the vehicle, the drive motor (8) is connected via a second transmission (9a, 9b) to a central shaft (6, 20), the central shaft (6, 20) being connected directly or via a third transmission (18a, 18b, 19) to the input of the first transmission (10) or forming its input shaft, and in that the output shaft (6a) of the first transmission (10) is connected or connectable to the rear wheel shaft (13) of the vehicle via a fourth transmission (10a, 10b, 11), wherein the first transmission (10) is a transmission with a plurality of gears, in particular a hub transmission or a continuously variable transmission (CVT), a control computer shifting the first transmission (10), **characterized in that** the speed of the pedal crankshaft (1) is applied to the input of the first transmission (10) with a ratio of less than 0.3, in particular between 0.2 and 0, 25 to the input of the first transmission (10) and the speed of the drive motor (8) is transmitted to the input of the first transmission (10) with a transmission ratio greater than 3, in particular between 4 and 5, a fourth transmission (10a, 10b, 11) transmitting the speed of the output shaft (6a) of the first transmission (10) to the driven rear wheel with a transmission ratio greater than 1, in particular greater than 1.5.

2. Drive system according to claim 1, **characterized in that** the second transmission (9a, 9b) is a single-stage or multi-stage, in particular two-stage, transmission, in particular in the form of a fixed gear transmission or toothed belt transmission.

3. Drive system according to claim 1 or 2, **characterized in that** the pedal crankshaft (1) is connected or can be coupled to the central shaft (6, 20) via a fifth gear unit (3a, 3b, 4), in particular a toothed belt or toothed gear unit.

4. Drive system according to one of the claims 1 to 3, **characterized in that** the motor output shaft (8c), the central shaft (6, 20) and the pedal crankshaft (1), the transmission output shaft (6c) are formed by separate axles, which are in particular separately mounted and/or the drive system is of modular design.

5. Drive system according to one of the preceding claims, **characterized in that** the second transmission (9a, 9b) transmits the force or torque of the drive motor (8) to the central shaft (6, 20), and the fifth transmission (3a, 3b, 4) transmits the force or torque of the pedal crank shaft (1) to the central shaft (6, 20).

6. Drive system according to one of the preceding claims, **characterized in that** a freewheel (5) is provided, which is arranged in particular between the pedal crankshaft (1) and the central shaft (6, 20), in such a way that no torque is transmitted from the central shaft (6, 20) to the pedal crankshaft (1) and/or **in that** a freewheel/clutch element (16) is arranged between the output shaft (8c) of the drive motor and the central shaft (6, 20).

7. Drive system according to one of the preceding claims, **characterized in that** the second transmission (9a, 9b) translates the speed of the drive motor (8) to the central shaft (6, 20) with a ratio i_{MW->ZW} >3, preferably between 4 and 6, preferably between 4 and 5, i.e. the shaft of the drive motor (8) rotates faster than the central shaft (6, 20).

8. Drive system according to one of the preceding claims, **characterized in that** the third transmission (18a, 18b, 19), in particular in the form of a chain, gear or belt transmission, translates the rotational speed of the central shaft (6, 20) with a ratio >1 to the transmission input shaft of the first transmission (10).

9. Drive system according to one of the preceding claims, **characterized in that** the rotational speed of the pedal crankshaft (1) acts on the central shaft (6, 20) via the fifth gear (3a, 3b, 4) with a ratio <0.4, preferably between 0.2 and 0.3, or via an intermediate shaft (20) on the input of the transmission (10).

10. Drive system according to one of the preceding claims, **characterized in that** the rotational speed of the output shaft (6a) of the first transmission (10) is transmitted to the driven wheel via the fourth transmission (10a, 10b, 11), with a belt or chain (11).

11. Drive system according to one of the preceding claims, **characterized in that** the pedal crankshaft (1a) is fixed and thus non-rotatable, wherein pedals (21) are arranged on the pedal crankshaft.

12. Drive system according to one of the preceding claims, **characterized in that** the drive system forms a separate unit with a drive module housing (22) which can be installed in a pedelec or e-bike, the drive motor (8) and the first gear unit (10), the second gear unit and the third gear unit being arranged in particular in the drive module housing (22).

13. Drive system according to claim 12, **characterized in that** the drive module housing (22) has two side plates (22a, 22b) which are connected by means of connecting elements, the connecting elements being in particular tubular inserts (25a- 25d) which connect the side plates (22a, 22b) to one another, in particular in sandwich construction.

14. Drive system according to one of the preceding claims, **characterized in that** the drive elements are arranged or can be arranged in or on the frame of the vehicle, in particular in a triangular arrangement, the drive motor (26) being arranged at the front in the direction of travel and the transmission (29) being arranged at the rear in the direction of travel, and **in that** the crankshaft (27a) is arranged below the transmission (29) and the drive motor (26).

15. Drive system according to one of the preceding claims, **characterized in that** the drive motor (26) is plug-in mounted, in particular via a key shaft (26b) or shaft with spline, the output gear wheel (26d) of the electric motor (26) being mounted in or on the frame of the vehicle and/or that the drive motor or electric motor housing (22) has two plates (22a, 22b) and connecting elements, such as tubular inserts (25a- 25d), which connect the plates to one another in a sandwich construction (tubes for gearbox, electric motor, shafts), in particular in a welded/riveted joint with plug for battery, and wherein the drive motor (26) is connected to the main tube (23) of the vehicle.

16. A pedelec or e-bike, with a drive system according to any of claims 1 to 15.

17. A method of operating a pedelec or e-bike, with a drive system according to any one of claims 1 to 15, **characterized in that** the vehicle is operable in one and/or more of the following operating modes:
a) in a first operating mode, the vehicle is driven purely mechanically via the pedal crankshaft;
b) in a second mode of operation, a pedal crankshaft torque amplification takes place, whereby the motor generates a torque in dependence on the of the measured torque of the pedal crankshaft (typical pedelec operating mode);
c) in a third e-bike operating mode, purely electric control is effected the motor controls the vehicle independently of the crankshaft speed and torque, in particular when the crankshaft is at a standstill.

18. Method according to claim 17, for operating an e-bike or pedelec with a pedal crankshaft and electric motor and with a control computer, wherein in one operating mode (GUMode1) mechanical operation with assistance from the electric motor takes place in such a way that the power loss of the drive train and/or the rolling resistance is compensated for by means of the electric motor, and
that the
assistance of the electric motor is adjusted according to the speed-dependent losses of the drive system, in such a way that a corresponding smoothness and low weight of the vehicle is suggested to the driver.

19. Method according to one of claims 17 or 18, **characterized in that**, in a further operating mode (GUMode2), complete driving resistance compensation is performed by evaluating additional sensor technology, a gyro sensor, to determine the slope of the roadway, a vehicle model being calculated for this purpose in which the driving resistances in the form of air resistance, rolling friction, slope downforce are determined and the motor is assisted accordingly.

20. Method according to one of claims 17 to 19, **characterized in that** in a further operating mode (GUMode3), by setting the desired power, corresponding support is provided by the engine by means of corresponding evaluation of the vehicle model.

## Revendications

1. Système d'entraînement destiné à un vélo à assistance électrique ou à un vélo électrique, ledit système comprenant un moteur électrique comme moteur d'entraînement (8), un arbre de pédalier (1) monté de manière rotative et une première transmission (10), la première transmission (10) et le moteur d'entraînement (8) étant disposés dans la zone centrale du véhicule, le moteur d'entraînement (8) étant relié à un arbre central (6, 20) par le biais d'une deuxième transmission (9a, 9b), l'arbre central (6, 20) étant relié directement ou par le biais d'une troisième transmission (18a, 18b, 19) à l'entrée de la première transmission (10) ou forment l'arbre d'entrée de celle-ci, et l'arbre de sortie (6a) de la première transmission (10) étant ou pouvant être relié à l'arbre de roue arrière (13) du véhicule par le biais d'une quatrième transmission (10a, 10b, 11), la première transmission (10) étant une transmission à changement de vitesses comprenant plusieurs vitesses, notamment une transmission à moyeu ou une transmission à réglage continue (CVT), un ordinateur de commande commutant la première transmission (10), **caractérisé en ce que** la vitesse de rotation de l'arbre de pédalier (1) est transmise à l'entrée de la première transmission (10) avec un développement inférieur à 0,3, notamment compris entre 0,2 et 0,25, et la vitesse de rotation du moteur d'entraînement (8) est transmise à l'entrée de la première transmission (10) avec un développement supérieur à 3, notamment compris entre 4 et 5, une quatrième transmission (10a, 10b, 11) transmettant la vitesse de rotation de l'arbre de sortie (6a) de la première transmission (10) à la roue arrière entraînée avec un développement supérieur à 1, notamment supérieur à 1,5.

2. Système d'entraînement selon la revendication 1, **caractérisé en ce que** la deuxième transmission (9a, 9b) est une transmission à un étage ou à plusieurs étages, en particulier à deux étages, en particulier sous la forme d'une transmission à roues dentées fixe ou d'une transmission à courroie crantée.

3. Système d'entraînement selon la revendication 1 ou 2, **caractérisé en ce que** l'arbre de pédalier est relié ou peut être accouplé à l'arbre central (6, 20) par le biais d'une cinquième transmission (3a, 3b, 4), en particulier d'une transmission à courroie crantée ou à roues dentées.

4. Système d'entraînement selon l'une des revendications 1 à 3, **caractérisé en ce que** l'arbre de sortie de moteur (8c), l'arbre central (6, 20), l'arbre de pédalier (1) et l'arbre de sortie de transmission (6c) sont formés par des axes distincts qui sont notamment montés séparément et/ou le système d'entraînement est construit de manière modulaire.

5. Système d'entraînement selon l'une des revendications précédentes, **caractérisé en ce que** la deuxième transmission (9a, 9b) transmet la force ou le couple du moteur d'entraînement (8) à l'arbre central (6, 20), et la cinquième transmission (3a, 3b, 4) transmet la force ou le couple de l'arbre de pédalier (1) à l'arbre central (6, 20).

6. Système d'entraînement selon l'une des revendications précédentes, **caractérisé en ce qu'**une roue libre (5) est prévue qui est disposée en particulier entre l'arbre de pédalier (1) et l'arbre central (6, 20) de manière à ce qu'aucun couple ne soit transmis de l'arbre central (6, 20) à l'arbre de pédalier (1) et/ou **en ce qu'**un élément de roue libre/d'accouplement (16) est disposé entre l'arbre de sortie (8c) du moteur d'entraînement et l' arbre central (6, 20).

7. Système d'entraînement selon l'une des revendications précédentes, **caractérisé en ce que** la deuxième transmission (9a, 9b) transmet la vitesse de rotation du moteur d'entraînement (8) à l'arbre central (6, 20) avec un développement i_{MW->ZW} > 3, de préférence compris entre 4 et 6, de préférence entre 4 et 5, c'est-à-dire que l'arbre du moteur d'entraînement (8) tourne plus vite que l'arbre central (6, 20).

8. Système d'entraînement selon l'une des revendications précédentes, **caractérisé en ce que** la troisième transmission (18a, 18b, 19), en particulier sous la forme d'une transmission à chaîne, à roues dentées ou à courroie, transmet la vitesse de rotation de l'arbre central (6, 20) à l'arbre d'entrée de transmission de la première transmission (10) avec un développement > 1.

9. Système d'entraînement selon l'une des revendications précédentes, **caractérisé en ce que** la vitesse de rotation de l'arbre de pédalier (1) est transmis à l'arbre central (6, 20) par le biais de la cinquième transmission (3a, 3b, 4) avec un développement < 0,4, de préférence compris entre 0,2 et 0,3, ou à l'entrée de la transmission (10) par le biais d'un arbre intermédiaire (20).

10. Système d'entraînement selon l'une des revendications précédentes, **caractérisé en ce que** la vitesse de rotation de l'arbre de sortie (6a) de la première transmission (10) est transmise à la roue entraînée par le biais de la quatrième transmission (10a, 10b, 11) pourvue d'une courroie ou d'une chaîne (11).

11. Système d'entraînement selon l'une des revendications précédentes, **caractérisé en ce que** l'arbre de pédalier (1a) est fixe et donc non rotatif, des pédales (21) étant disposées sur l'arbre de pédalier.

12. Système d'entraînement selon l'une des revendications précédentes, **caractérisé en ce que** le système d'entraînement forme avec un boîtier de module d'entraînement (22) une unité séparée qui peut être incorporée dans un vélo à assistance électrique ou un vélo électrique, le moteur électrique (8) ainsi que la première transmission, la deuxième transmission et la troisième transmission étant disposés en particulier dans le boîtier de module d'entraînement (22).

13. Système d'entraînement selon la revendication 12, **caractérisé en ce que** le boîtier de module d'entraînement (22) comporte deux plaques latérales (22a, 22b) qui sont reliées au moyen d'éléments de liaison, les éléments de liaison étant en particulier des inserts tubulaires (25a-25d) qui relient les plaques latérales (22a, 22b) l'une à l'autre, en particulier selon une construction en sandwich.

14. Système d'entraînement selon l'une des revendications précédentes, **caractérisé en ce que** les éléments d'entraînement sont disposés ou peuvent être disposés dans ou sur le cadre du véhicule, notamment selon une disposition triangulaire, le moteur d'entraînement (26) étant disposé à l'avant dans le sens de roulement et la transmission (29) étant disposée à l'arrière dans le sens de roulement et l'arbre de pédalier (27a) étant disposé au-dessous de la transmission (29) et du moteur d'entraînement (26).

15. Système d'entraînement selon l'une des revendications précédentes, **caractérisé en ce que** le moteur d'entraînement (26) est fixé de manière enfichable, notamment par le biais d'un arbre à clavette (26b) ou d'un arbre à cannelures, la roue dentée de sortie (26d) du moteur électrique (26) étant monté dans ou sur le cadre du véhicule, et/ou **en ce que** le moteur d'entraînement ou le boîtier de moteur électrique (22) comporte deux plaques (22a, 22b) et des éléments de liaison tels que des inserts tubulaires (25a-25d) qui relient les plaques entre elles selon une construction en sandwich (tubes pour transmission, moteur électrique, arbres), en particulier dans une liaison soudée/rivetée avec des connecteurs destinés à une batterie, le moteur d'entraînement (26) étant relié au tube principal (23) du véhicule.

16. Vélo à assistance électrique ou vélo électrique comprenant un système d'entraînement selon l'une des revendications 1 à 15.

17. Procédé de fonctionnement d'un vélo à assistance électrique ou d'un vélo électrique à l'aide d'un système d'entraînement selon l'une des revendications 1 à 15, **caractérisé en ce que** le véhicule peut fonctionner dans un et/ou plusieurs des modes de fonctionnement suivants :
a) dans un premier mode de fonctionnement, le véhicule est entraîné de manière purement mécanique par le biais de l'arbre de pédalier ;
b) dans un deuxième mode de fonctionnement, un couple d'arbre de pédalier est amplifié, le moteur fournissant un couple en fonction du couple mesuré de l'arbre de pédalier (mode de fonctionnement typique du vélo à assistance électrique) ;
c) une commande purement électrique est effectuée dans un troisième mode de fonctionnement du vélo électrique, le moteur entraînant le véhicule indépendamment de la vitesse de rotation et du couple de l'arbre de pédalier, notamment lorsque l'arbre de pédalier est à l'arrêt.

18. Procédé selon la revendication 17, de fonctionnement d'un vélo électrique ou d'un vélo à assistance électrique comprenant un arbre de pédalier et un moteur électrique ainsi qu'un ordinateur de commande, dans un mode de fonctionnement (GUMode1) le fonctionnement mécanique étant effectué à l'aide d'un moteur électrique de manière à ce que la perte de puissance de la chaîne cinématique et/ou la résistance au roulement soient compensées par le moteur électrique et l'assistance du moteur électrique étant réglée en fonction des pertes du système d'entraînement, lesquelles dépendent de la vitesse de rotation, de manière à ce que le conducteur ait l'impression que le véhicule est facile à manœuvrer et a un faible poids.

19. Procédé selon l'une des revendications 17 ou 18, **caractérisé en ce que**, dans un autre mode de fonctionnement (GUMode2), une compensation complète de la résistance au roulement est effectuée par exploitation de capteurs supplémentaires, d'un capteur gyroscopique, pour déterminer la pente de la chaussée, un modèle de véhicule étant pour cela calculé par détermination des résistances au roulement sous forme de résistance à l'air, de frottement de roulement, de force de descente et par une assistance correspondante par le moteur.

20. Procédé selon l'une des revendications 17 à 19, **caractérisé en ce que**, dans un autre mode de fonctionnement (GUMode3) par réglage de la puissance souhaitée, une assistance correspondante par le moteur est effectuée par une exploitation correspondante du modèle de véhicule.
